# EUROPEAN PATENT SPECIFICATION

(11) **EP 0 489 526 B1**
(45) Date of publication and mention of the grant of the patent: **08.01.1997**
(21) Application number: 91310869.2
(22) Date of filing: 26.11.1991
(51) Int. Cl.: B65B 51/14

(54) **Carton top sealing mechanism**
Kartonverschliessmechanismus
Mécanisme de fermeture de boîtes en carton

(30) Priority: 04.12.1990 US 622005
(43) Date of publication of application: 10.06.1992
(60) Divisional application: 96107000.0
(73) Proprietor: ELOPAK SYSTEMS AG, CH-8152 Glattbrugg (CH)
(72) Inventor: Esper, Leo Joseph, Troy, Michigan 48098 (US)
(74) Representative: Burrows, Anthony Gregory

(56) References cited:
- EP-A- 0 097 984
- EP-A- 0 203 572
- FR-A- 2 330 595
- US-A- 2 859 796
- US-A- 4 193 341
- US-A- 4 735 031

## Description

This invention relates generally to carton top sealing mechanisms and, more particularly, to a carton top sealing mechanism utilizing a pneumatic membrane.

Currently, plastic-coated paperboard gable top carton seals are created in the following manner. The plastic coating on the paperboard carton is heat-activated in any suitable manner, such as hot air, radiated head, or ultrasonic vibration, to a point at which the plastic is tacky. The carton panels are folded and guided together, and then squeezed between jaws and cooled, until the seal takes a set. Sufficient pressure must be applied during the sealing operation, to extrude the softened plastic, to fill the pockets and voids created by the folded and abutting multiple paperboard layers.

Depending upon the number of cartons to be squeezed at one time, a few thousand to many thousands of newtons (several hundred to a few thousand pounds of force) must be transmitted to the jaws, to generate this pressure. The stroke requirement for the jaws is approximately 5/8 centimetre (1/4 inch).

The force applied to the jaws to squeeze the cartons, is generated by either a straight push, or a leverage/linkage driven design. The straight push design requires large, relatively expensive pneumatic cylinders to push the sealing jaws. The leverage/linkage driven designs can utilize smaller pneumatic cylinders, or a cam, to actuate a linkage system, utilizing leverage ratios to generate the required force at the sealing jaws. However, the linkage components, pivot mounts, and lubrication requirements, are generally quite expensive for this method also.

EP-A-0203572 discloses a portable sealing apparatus for the sealing of plastic-coated paperboard cartons, including a frame and a fixed jaw mounted thereto. A single movable jaw is utilized to seal top portions of the carton by fusing of a polyethylene coating thereon. A guide channel for the bottom of the carton enables manual placement of the carton with the sealable portions thereon disposed between the fixed and movable jaws. The top portions of the carton are guided between the jaws by guides formed at one end with laterally inwardly converging entrance surfaces. The jaws are generally spaced apart a distance of approximately 5/8 of a centimetre (approximately 1/4 of an inch). Proper selection of pressure, time and controlled heating of the jaws enables the carton to remain adjacent the fixed jaw before, during and after the sealing thereof, without subsequent remelting of the polyethylene coating and opening of the seal for a period of time.

US-A-4,735,031 includes a pressing punch (Figures 13 and 14) which is pushed by a flexible hose or tube containing a medium under a definite pressure toward a pressing table to weld two folded-over layers of a container collar together.

US-A-2,859,796 discloses two flexible tubes (Figures 3 and 4) which, when inflated, move heated resilient material into engagement with a workpiece, such as two plies of heat-sealable ends of a pouch, to seal the same.

US-A-3,808,968 is typical of press devices wherein inflatable hoses are utilized in conjunction with platens to bind two superposed flat articles.

US-A-4193341 discloses a platen for a press used to join, by way of a thin layer of uncured vulcanizable material, two sheets of rubber or rubber-like material. The platen comprises a housing having a recess therein, an inflatable tubular member being received in the recess. When the inflatable member is inflated, it acts as a pressure applying member on an elongate strip of flexible material, such as synthetic rubber, which itself acts directly on the workpiece. The strip and the tubular member are retained in position in the recess by means of a skirt secured to the housing. The housing is secured to a vertically movable ram. An oppositely disposed lower platen is fixed and includes an inverted-channel-form member containing an electrical heating element supported upon an insulating layer of fibrous lagging material itself supported upon a rigid layer of thermally insulating material, which directly supports the inverted-channel-form member. The press may be used for all types of pressing operations alternatively to vulcanization, for example as a brake-press for forming sheet metal. The press may be provided with one or two platens of the kind containing an inflatable member.

According to the present invention, there is provided a sealing mechanism for sealing thermoplastic materials, said mechanism comprising a fixed sealing jaw, an oppositely disposed movable sealing jaw, driving means for displacing said movable sealing jaw towards said fixed sealing jaw when said materials are positioned intermediate the fixed and movable jaws, thereby to squeeze the materials between the jaws to seal the materials, and a pneumatic membrane operatively connected to said movable sealing jaw, said driving means serving to inflate said pneumatic membrane and thus displace said movable sealing jaw towards said fixed sealing jaw, characterized that said fixed sealing jaw comprises a plurality of separate, semi-rigidly arranged jaw segments for bearing against respective top sealing fins of respective thermoplastic-coated paperboard cartons.

The separate, semi-rigid arrangement of the jaw segments permits non-defective cartons between the fixed and movable jaws to be sealed even in the event that a defective carton is present between the jaws. Moreover, owing to the invention, it is possible to provide an improved, efficient and simplified carton top sealing mechanism. The mechanism utilizes a pneumatic membrane, in lieu of mechanical drives or air cylinders, to actuate oppositely disposed sealer jaws. The membrane is operatively connected to a movable sealing jaw for urging the same into engagement with carton gable top sealing panels positioned between the movable jaw and a stationary jaw.

In order that the invention may be clearly understood and readily carried into effect, reference will now be made, by way of example, to the accompanying drawings, in which:-
Figure 1 is a fragmentary side elevational schematic view of a carton top sealing mechanism outside the scope of the present claim 1;
Figure 2 is an exploded view of the carton top sealing mechanism of Figure 1;
Figure 3 is a cross-sectional view of a pneumatic membrane component of the carton top sealing mechanism of Figure 1 in one operational condition;
Figure 4 is a cross-sectional view of the pneumatic membrane component in another operational condition;
Figure 5 is a side elevational view, similar to Figure 1, illustrating a carton top sealing mechanism which is within the scope of the present claim 1;
Figure 6 is a top plan view of the Figure 5 embodiment; and
Figure 6A is an enlarged view of a portion of Figure 6.

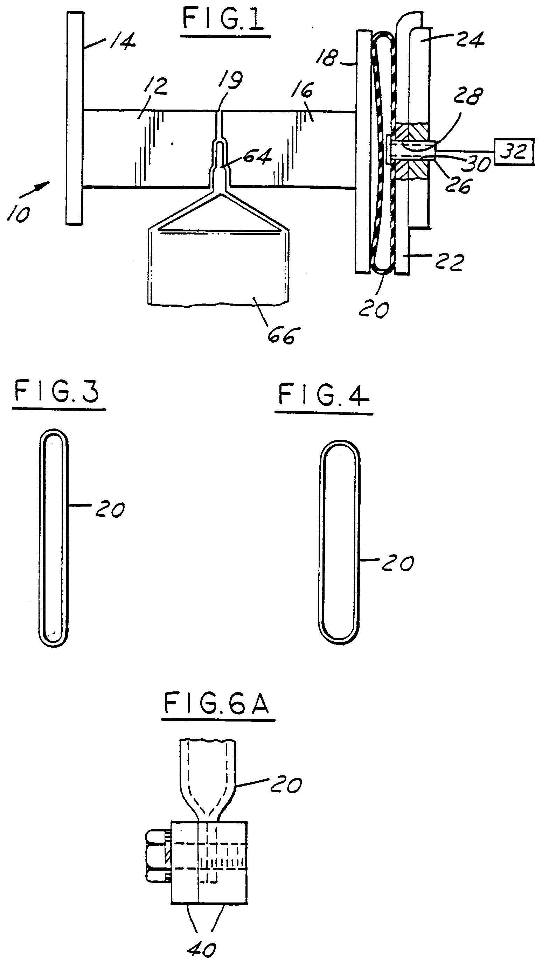

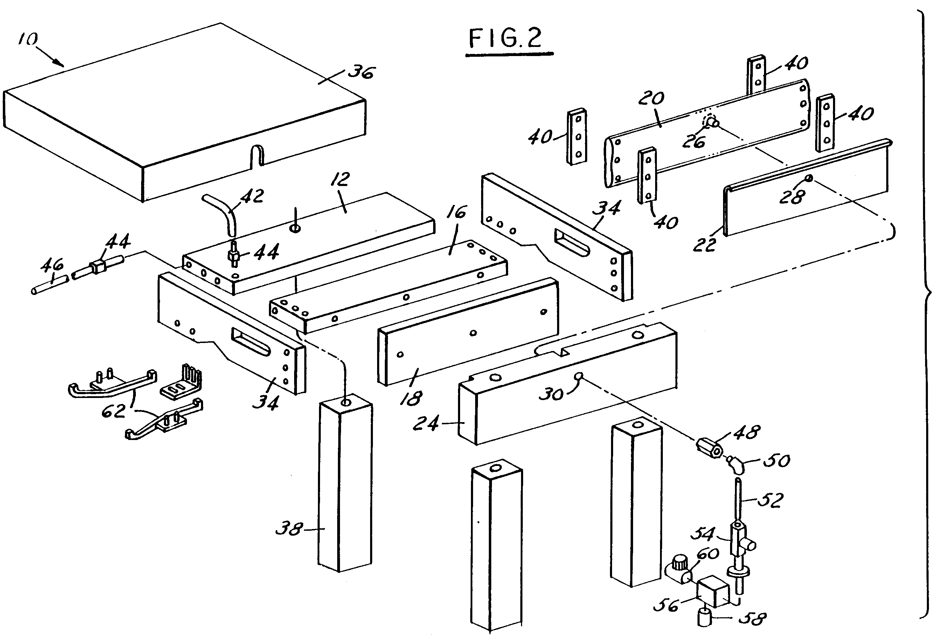

Referring now to the drawings in greater detail, Figure 1 illustrates a carton top sealing mechanism 10 including a horizontally oriented stationary jaw 12 extending from a fixed support member 14. An oppositely disposed, horizontally oriented movable jaw 16 extends from a movable pressure plate 18. It is well-known that the oppositely disposed faces 19 of respective sealing jaws may be contoured to accommodate variable thicknesses therebetween.

A pneumatic bladder or membrane 20 is mounted between the movable pressure plate 18 and a fixed pressure plate 22 secured to a support member 24. An inlet tube 26 extends from the pneumatic membrane 20 through aligned openings 28 and 30 formed in the pressure plate 22 and the support member 24, respectively. The inlet tube 26 is connected to a source of air under pressure, represented as 32.

Figure 2 illustrates the above referenced elements 12, 16, 18, 20, 22, 24, 26, 26 and 30 in more detail, along with a pair of oppositely disposed side support members 34, a cover member 36, supporting legs 38, and two pairs of pinch blocks 40 positioned at opposite ends of the pneumatic membrane 20 between the movable and fixed pressure plates 18 and 22, respectively.

For water cooled stationary and moving jaws 12 and 16, respectively, a coolant line 42, suitable fittings 44, and a return line 46 would be provided for each.

In between the inlet tube 26 and the source 32 of air under pressure, various typical pneumatic connector and control components are utilized such as a nut 48, an elbow 50, a tube 52, a speed control unit 54, a pneumatic valve 56, a muffler 58, and a pressure regulator 60.

Suitable converging closing rails 62 (Figure 2) may serve to bring the usual sealing fins 64 of a gable top carton 66 into close proximity to one another just before entering the space between the jaws 12 and 16, preventing any jam therewith.

In operation, once the sealing fins 64 (Figure 1) of a typical gable top carton 66 are indexed into a position intermediate the spaced-apart stationary and movable sealing jaws 12 and 16, respectively, a suitable signal is transmitted to the pneumatic valve 56. The pressure regulator 60 supplies a predetermined pressure, e.g., 450 KPa (65 psi), via the tube 52, elbow 50, and inlet tube 26 to the interior of the membrane 20, to thereby cause the latter to expand from a condition represented in Figure 3 to that represented in Figure 4, resulting in approximately five-eights of a centimetre [1/4 inch] of horizontal stroke.

This actuation forces the movable jaw 16 laterally to engage the container sealing fins 64 between the fixed and movable jaws 12 and 16, respectively. Inasmuch as, in the usual forming, filling and sealing machine, the sealing fins 64 of thermoplastic coated paperboard cartons 66 are heated prior to entering the sealing area, the resultant squeezing operation between the jaws 12 and 16 serves to create a liquid tight seal between the sealing fins.

A predetermined plurality of aligned cartons 66 may be indexed by a conventional conveyor (not shown) into position between the oppositely disposed jaws 12 and 16, along the lengths thereof, prior to causing the expansion of the pneumatic membrane 20.

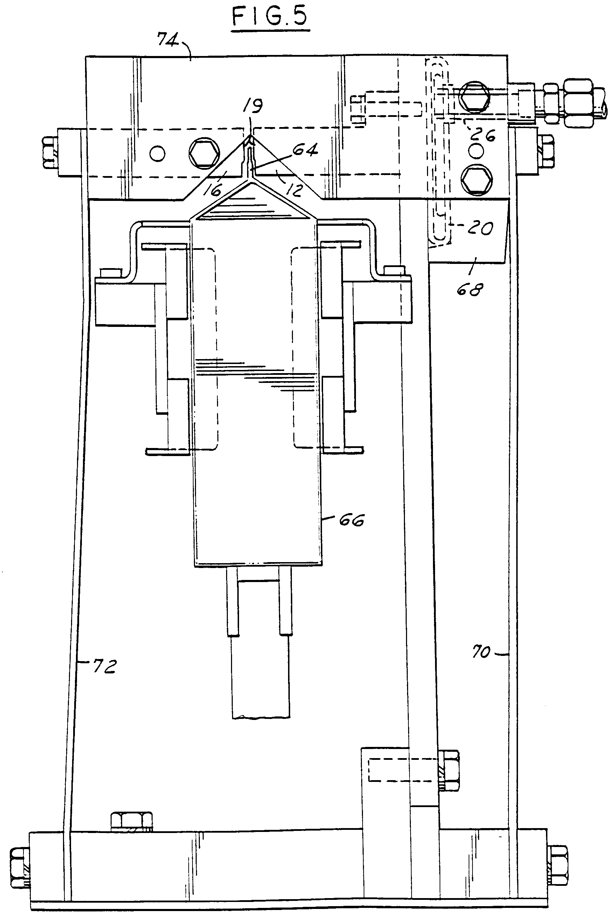

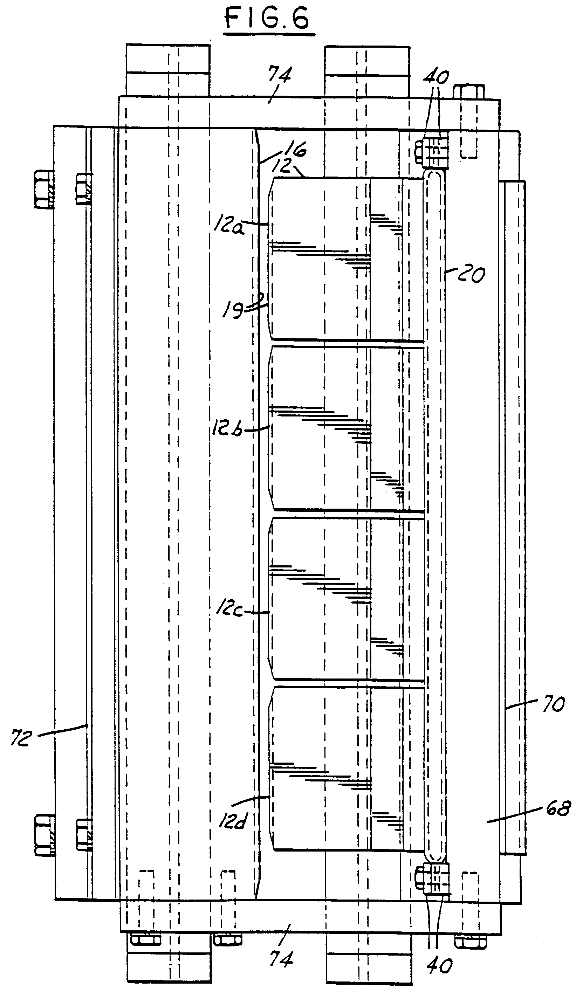

Referring now to Figures 5, 6 and 6A, there is shown a mechanism constituting an embodiment of the invention: all elements comparable to elements of the Figures 1-4 mechanism bear the same reference numerals. In addition, it will be noted that the positions of the stationary and movable jaws 12 and 16, respectively, have been reversed. In this mechanism the membrane 20 expands to the right in Figure 5, moving a movable pressure plate 68 to the right, against the force of a spring support member 70 supporting the pressure plate 68, causing connector plates 74 to move the movable jaw 16 to the right to engage the sealing fins 64 between the oppositely disposed faces 19 to seal same. This action bows a second spring support member 72 serving to support the movable jaw 16. Once the membrane is deflated, the spring members 70 and 72 return the pressure plate 68 and the movable jaw 16 to their respective leftward positions.

As shown in Figure 6, it is more apparent that from one to four cartons 66 may be aligned between and sealed by the action of the movable jaw 16, against the fixed jaw 12. The latter, in this mechanism, is formed to include four semi-rigidly fixed segments 12a, 12b, 12c and 12d, which are adapted to permit three cartons, for example, to be sealed in the event there is a fourth defective carton in place.

As shown in Figure 6A, the ends of the membrane 20 are confined between the oppositely disposed pinch blocks 40.

It should be apparent that there has been described with reference to the drawings an efficient and simplified carton top sealing mechanism for use with heat-activated thermoplastic-coated paperboard cartons processed on conventional forming, filling and sealing machines. More specifically, the geometric "footprint" or area of the pneumatic membrane is such that it is applied uniformly to the movable sealing jaw to thus permit more compact machine designs. Additionally, since the membrane does not include any frictional or rubbing components, smoother and more readily repeatable stroke acceleration characteristics are possible as compared to mechanical or air cylinder type drive arrangements. Furthermore, the membrane, being an unconstrained device, does not require critical mounting or alignment.

## Claims

1. A sealing mechanism for sealing thermoplastic materials (64), said mechanism (10) comprising a fixed sealing jaw (12), an oppositely disposed movable sealing jaw (16), driving means (32) for displacing said movable sealing jaw (16) towards said fixed sealing jaw (12) when said materials (64) are positioned intermediate the fixed and movable jaws (12,16), thereby to squeeze the materials (64) between the jaws (12,16) to seal the materials (64), and a pneumatic membrane (20) operatively connected to said movable sealing jaw (16), said driving means (32) serving to inflate said pneumatic membrane (20) and thus displace said movable sealing jaw (16) towards said fixed sealing jaw (12), characterized in that said fixed sealing jaw (12) comprises a plurality of separate, semi-rigidly arranged jaw segments (12a-12d) for bearing against respective top sealing fins (64) of respective thermoplastic-coated paperboard cartons (66).

2. A sealing mechanism according to claim 1, and further comprising a pair of fixed and movable pressure plates (22, 18) for confining said membrane (20) therebetween, said movable pressure plate (18) being operatively connected to said movable sealing jaw (16).

3. A sealing mechanism according to claim 2 and further comprising a connector plate (74) interconnecting said movable pressure plate (18) and said movable sealing jaw (16).

4. A sealing mechanism according to claim 2 or 3, and further comprising a pair of spring members (70,72) for supporting said movable pressure plate (68) and said movable sealing jaw (16), respectively, serving to return said movable pressure plate (68) and said movable sealing jaw (16) to their original positions when said membrane (20) is deflated.

5. A sealing mechanism according to any preceding claim, wherein said plurality of segments (12a-12d) is four.

6. A sealing mechanism according to any preceding claim, and further comprising converging rails (62) positioned so as to urge said sealing fins (64) into close proximity to one another in order to enter the space intermediate said fixed and movable jaws (12,16).

7. A sealing mechanism according to any preceding claim, wherein said pneumatic membrane (20) is capable of expanding by of the order of five-eighths of a centimetre (one-fourth of an inch).

## Patentansprüche

1. Siegelmechanismus zum Siegeln thermoplastischer Materialien (64), wobei der Mechanismus (10) aufweist: eine feststehende Siegelbacke (12), eine gegenüberliegend angeordnete bewegbare Siegelbacke (16), eine Antriebseinrichtung (32) zum Verschieben der bewegbaren Siegelbacke (16) in Richtung auf die feststehende Siegelbacke (12), wenn die Materialien (64) zwischen der feststehenden und der bewegbaren Siegelbacke (12, 16) angeordnet sind, um so die Materialien (64) zwischen den Backen (12, 16) zum Siegeln der Materialien (64) einzuklemmen, und eine pneumatische Membran (20), die betriebsmäßig mit der bewegbaren Siegelbacke (16) verbunden ist, wobei die Antriebseinrichtung (32) zum Aufblasen der pneumatischen Membran (20) und somit zum Verschieben der bewegbaren Siegelbacke (16) in Richtung auf die feststehende Siegelbacke (12) dient, dadurch gekennzeichnet, daß die feststehende Siegelbacke (12) mehrere separate, halbstarr angeordnete Backensegmente (12a-12d) zur Anlage an jeweilige obere Siegellaschen (64) jeweiliger mit thermoplastischem Material beschichteter Pappkartons (66) aufweist.

2. Siegelmechanismus nach Anspruch 1, und ferner mit einem Paar aus einer feststehenden und einer bewegbaren Druckplatte (22, 18) zum Einschließen der Membran (20) zwischen diesen, wobei die bewegbare Druckplatte (18) betriebsmäßig mit der bewegbaren Siegelbacke (16) verbunden ist.

3. Siegelmechanismus nach Anspruch 2 und ferner mit einer Verbindungsplatte (74), die die bewegbare Druckplatte (18) und die bewegbare Siegelbacke (16) miteinander verbindet.

4. Siegelmechanismus nach Anspruch 2 oder 3, und ferner mit zwei Federelementen (70, 72) zum Stutzen der bewegbaren Druckplatte (68) und der bewegbaren Siegelbacke (16), wobei die Federelemente dazu dienen, die bewegbare Druckplatte (68) und die bewegbare Siegelbacke (16) in ihre Ausgangspositionen zurückzustellen, wenn die Membran (20) entspannt ist.

5. Siegelmechanismus nach einem der vorhergehenden Ansprüche, bei dem die Zahl der mehreren Segmente (12a-12d) vier beträgt.

6. Siegelmechanismus nach einem der vorhergehenden Ansprüche und ferner mit konvergierenden Schienen (62), die derart positioniert sind, daß sie die Siegellaschen (64) in enge Annäherung aneinander bringen, so daß diese in den zwischen der feststehenden und der bewegbaren Backe (12, 16) bestehenden Raum eintreten können.

7. Siegelmechanismus nach einem der vorhergehenden Ansprüche, bei dem die pneumatische Membran (20) in der Lage ist, sich in der Größenordnung von fünf Achtel Zentimeter (ein Viertel Inch) auszudehnen.

## Revendications

1. Un mécanisme de fermeture pour fermer des matières thermoplastiques (64), ledit mécanisme (10) comprenant une mâchoire de fermeture fixe (12), une mâchoire de fermeture mobile disposée de manière opposée (16), des moyens d'entraînement (32) pour déplacer ladite mâchoire de fermeture mobile (16) vers ladite mâchoire de fermeture fixe (12) lorsque lesdites matières (64) sont placées entre lesdites mâchoires fixe et mobile (12, 16) de manière à serrer les matières (64) entre les mâchoires (12, 16) afin de fermer les matières (64), et une membrane pneumatique (20) reliée de manière fonctionnelle à ladite mâchoire de fermeture mobile (16), lesdits moyens d'entraînement (32) servant à gonfler ladite membrane pneumatique (20) et a ainsi déplacer ladite mâchoire de fermeture mobile (16) vers ladite mâchoire de fermeture fixe (12), caractérisé en ce que ladite mâchoire de fermeture fixe (12) comprend un ensemble de segments de mâchoires séparés montés de manière semi-rigide (12a-12d) pour prendre appui contre des pattes de fermeture de dessus respectives (64) de boîtes en carton respectives (66) revêtues de matière thermoplastique.

2. Un mécanisme de fermeture selon la revendication 1, et comprenant en outre une paire de plaques de pression fixe et mobile (22, 18) pour enfermer entre elles ladite membrane (20), ladite plaque de pression mobile (18) étant reliée de manière fonctionnelle à ladite mâchoire de fermeture mobile (16).

3. Un mécanisme de fermeture selon la revendication 2, et comprenant en outre une plaque de liaison (74) reliant entre elles ladite plaque de pression mobile (18) et ladite mâchoire de fermeture mobile (16).

4. Un mécanisme de fermeture selon la revendication 2 ou 3, et comprenant en outre une paire d'éléments à ressort (70, 72) pour porter respectivement ladite plaque de pression mobile (68) et ladite plaque de fermeture mobile (16), de manière à ramener ladite plaque de pression mobile (68) et ladite mâchoire de fermeture mobile (16) vers leur position d'origine lorsque ladite membrane (20) est dégonflée.

5. Un mécanisme de fermeture selon une revendication précédente quelconque, dans lequel les segments dudit ensemble de segments (12a-12d) sont au nombre de quatre.

6. Un mécanisme de fermeture selon une revendication précédente quelconque, et comprenant en outre des rails convergeants (62) placés de manière à pousser lesdites pattes de fermeture (64) très près l'une de l'autre afin de pénétrer dans l'espace entre lesdites mâchoires fixe et mobile (12, 16).

7. Un mécanisme de fermeture selon une revendication précédente quelconque, dans lequel ladite membrane pneumatique (20) peut se dilater de l'ordre de cinq huitième de centimètre (un quart de pouce).
